# EUROPEAN PATENT SPECIFICATION

(11) **EP 1 982 207 B1**
(45) Date of publication and mention of the grant of the patent: **30.11.2011**
(21) Application number: 06825403.6
(22) Date of filing: 04.10.2006
(51) Int. Cl.: G01S 19/25

(54) **INTERNET BASED ASSISTED GLOBAL POSITIONING SYSTEM**
AUF DEM INTERNET BASIERENDES UNTERSTÜTZTES GLOBALES POSITIONSBESTIMMUNGSSYSTEM
SYSTÈME DE POSITIONNEMENT MONDIAL ASSISTÉ PAR INTERNET

(30) Priority: 09.02.2006 US 350511
(43) Date of publication of application: 22.10.2008
(73) Proprietor: Alcatel Lucent, 75007 Paris (FR)
(72) Inventor: BERLINSKY, Allan, M., Morris Township, NJ 07960 (US); FLOYD, David, G., Sparta, NJ 07871 (US); O'NEIL, Lawrence, H., Jr., Randolph, NJ 07869 (US); PUNTURIERI, Jospeh, Staten Island, NY 10314 (US)
(74) Representative: Sarup, David Alexander
(86) International application number: PCT/US2006/038658
(87) International publication number: WO 2007/092058

(56) References cited:
- US-A1- 2005 043 038
- US-A1- 2005 232 189
- US-B1- 6 665 715

## Description

### Field of the Invention

This invention generally relates to communications. More particularly this invention relates to communications to facilitate locating a device.

### Description of the Related Art

Global positioning systems (GPS) are known. Typical arrangements include GPS receivers that can communicate with GPS satellites to determine a geolocation of the receiver using known techniques. A shortcoming associated with typical GPS receivers is that they require a clear view of the sky and require signals from at least four satellites. These limitations exclude operation from within buildings or other RF-shadowed environments. Another drawback associated with typical GPS receivers is that they require several minutes to achieve a location fix. This can be a considerable delay for many applications, such as locating a mobile station such as a cell phone in response to a 911 emergency call.

There has been an effort to provide position or geolocation information regarding cell phones, for example, in response to 911 emergency calls. One difficulty associated with using traditional GPS receivers in such devices is the additional cost, size and power consumption associated with incorporating a conventional GPS receiver into a cell phone. This problem becomes more pronounced with the increasing miniaturization of cell phones.

In an effort to avoid the various drawbacks associated with conventional GPS receivers, assisted-GPS technology has been developed for use with wireless cellular networks. Such arrangements utilize information available from the cellular network regarding the location of a mobile station to provide an initial estimate regarding the actual location. Most cellular networks are divided into geographic regions known as cells that are each served by one or more base stations. The network can determine what mobile station is being serviced by which base station. Knowledge regarding the geographic region covered by a particular base station provides an initial rough estimate of a mobile station's position or location.

Assisted GPS techniques include using such an initial estimate of a mobile station's location to provide information to a modified GPS receiver associated with that mobile station. The modified GPS receiver uses the initial location information to assist it in communicating with GPS satellites for making a determination location. The assist information guides the modified GPS receiver for directing the attempted communications with GPS satellites in a manner that speeds up the location process and does not require as much processing power by the modified GPS receiver.

The published applications US2005/043038 and US2005/232189 disclose techniques for locating wireless communication mobile stations using information regarding an IP connection. While such arrangements have proven useful for mobile stations that communicate within a cellular network, there is still a need for assisted GPS in other contexts. For example, it would be useful to be able to locate or track a device that is not capable of communicating in a cellular network. This invention provides an arrangement that expands the capability of a GPS system to provide assisted-GPS location for a wider variety of devices.

### SUMMARY OF THE INVENTION

The invention is described in the appended claims. An exemplary method of locating a device includes using an estimated device location based upon Internet information regarding the device for generating an assisted global positioning system communication for the device to facilitate the device interacting with a global positioning system.

One example includes determining the estimated device location from an Internet connection with the device. At least one GPS code is determined that is associated with the determined estimated device location. In examples where the at least one GPS code is provided to the device, the method includes receiving an indication of information corresponding to the device using the at least one GPS code for interacting with a GPS system. An actual device location can be determined from the received indication.

One example method includes receiving an assisted global positioning system communication corresponding to an estimated device location that is based upon Internet information regarding the device. The received assisted global positioning system communication can then be used for interacting with a global positioning system to obtain information regarding an actual location of the device.

One example method includes transmitting the information regarding the actual device location so that it can be processed remotely from the device for determining the actual location of the device.

The various features and advantages of this invention will become apparent to those skilled in the art from the following detailed description. The drawings that accompany the detailed description can be briefly described as follows.

### BRIEF DESCRIPTION OF THE DRAWINGS

Figure 1 schematically shows selected portions of a communication system for locating at least one device.
Figure 2 is a flowchart diagram summarizing one example approach useful with an embodiment of this invention.
Figure 3 schematically illustrates selected portions of the embodiment of Figure 1 in somewhat more detail.

### DETAILED DESCRIPTION

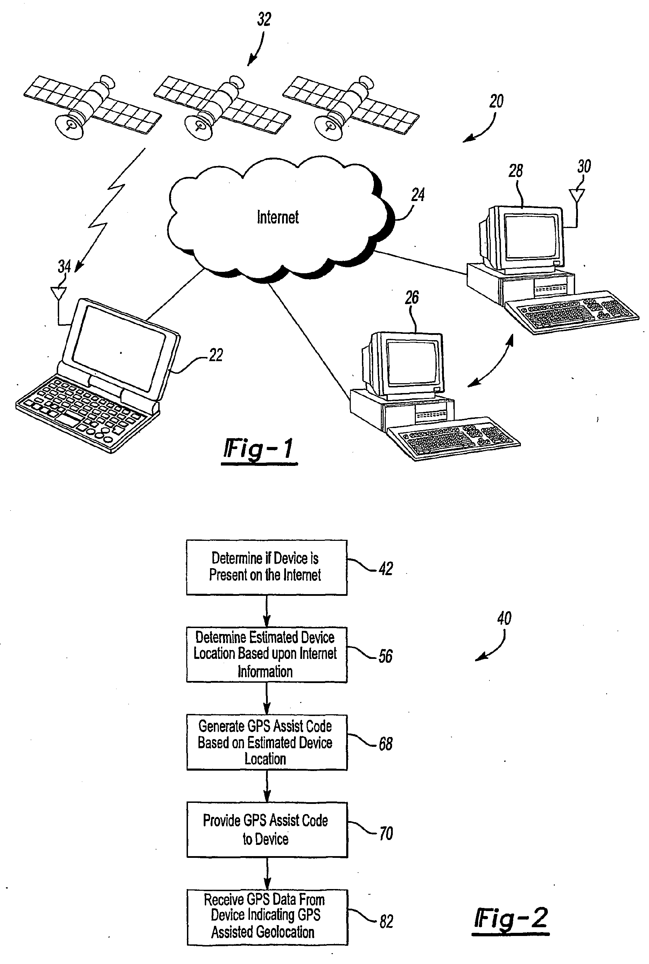

Figure 1 schematically shows a communication arrangement 20 that is useful for locating at least one device 22. In the illustration, the device 22 comprises a notebook or laptop computer. Other example user devices include personal digital assistants, fax machines and other portable devices.

The device 22 is capable of communicating over the Internet 24 using line-based or wireless technology, for example. Any user device that is capable of communicating over the Internet 24 may be located using an embodiment of this invention provided that the device has a capacity for assisted global positioning system location determination.

The example of Figure 1 includes a network server 26 that utilizes the Internet 24 for making an initial estimation of a position of the device 22 based upon Internet information regarding the device 22. In this example, the network server 26 provides the initial position estimate information to a location server 28. In this example, the location server 28 utilizes the initial position estimate information to generate a communication intended for the device 22 that assists the device 22 in communicating with a global positioning system (GPS) for making a determination regarding an actual location of the device 22. In this example, the location server 28 includes an antenna 30 that is capable of GPS communications with GPS satellites 32, for example.

The device 22 includes an antenna 34 for communicating with the GPS satellites 32 for determining at least an estimate of the actual location of the device 22 using GPS location techniques. That information can then be communicated over the Internet 24, for example, to the network server 26 so that an indication of the actual or estimated location of the device 22 may be handled in a desired manner.

Such an arrangement provides the ability to locate a variety of devices in a manner that takes advantage of GPS technology. The illustrated arrangement does not require each such device to have an independent GPS receiver. Instead, a modified GPS receiver may be used that can operate based upon an assisted-GPS communication to guide the receiver in communicating with a GPS system for gathering information useful for making a location determination.

Figure 2 includes a flowchart diagram 40 that summarizes one example approach. The process in Figure 2 begins at 42 where a determination is made if a device in question is present on the Internet. Internet presence may be detected in a variety of known manners. "Present on the Internet" as used in this description refers to a device that is being used for communications over the Internet or that has an active Internet connection, for example.

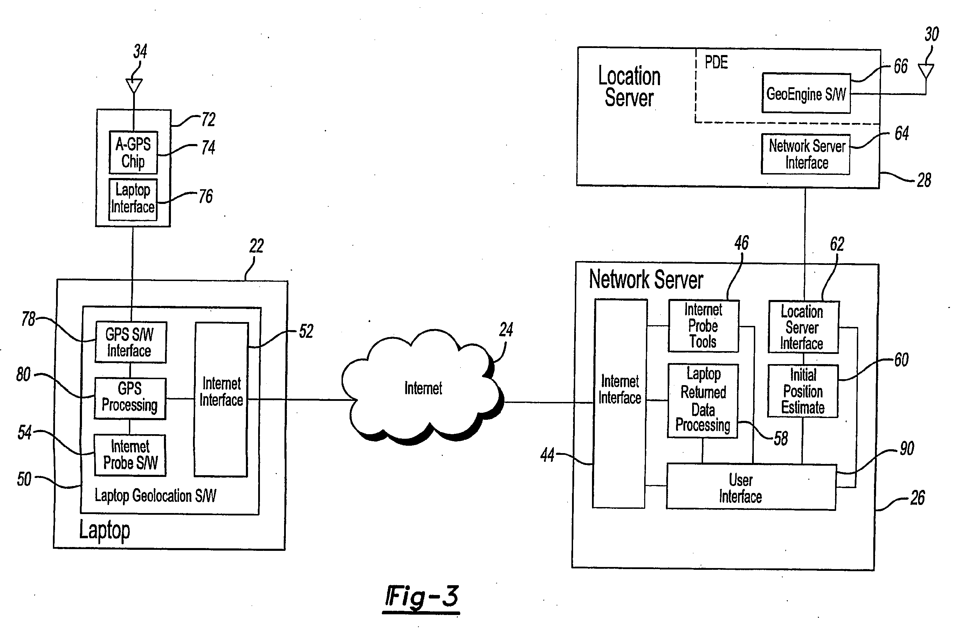

As schematically shown in Figure 3, the example network server 26 includes an Internet interface module 44 and an Internet probe tools module 46. The various modules or divisions shown in Figure 3 are shown schematically for discussion purposes. Each module or division may comprise hardware, software or both. The various functions associated with each illustrated module may be shared differently from what is shown in Figure 3 among various divisions within devices capable of performing the functions of the network server 26, the location server 28 and the device 22. Those skilled in the art who have the benefit of this description will realize how best to arrange components to accomplish the results provided by the illustrated example in a manner that will best suit their particular needs. For example, it may be possible to integrate the network server 26 and the location server 28 into a single device or to divide one or both of them into more than one device.

The network server 26 utilizes the Internet probe tools module 46 for determining whether a device of interest (e.g., the device 22) is present on the Internet. In one example, the device 22 sends out a beacon-type signal that can be detected using known Internet probe tools. In another example, the device 22 includes a unique identifier that is associated with Internet communications originating from the device 22 in a manner that the identifier can be tracked to detect the presence of the device 22 on the Internet.

In the illustration of Figure 3, the device 22 includes a geolocation module 50 that has an Internet interface module 52 and an Internet probe module 54 that facilitate the network server 26 determining whether the device 22 is present on the Internet 24.

Once the network server 26 determines that the device 22 is present on the Internet, the network server 26 determines an estimated device location based upon Internet information regarding the device 22. This occurs at 56 in Figure 2. In one example, the Internet probe module 54 includes software that sends relevant or useful local network information such as an IP address, an identifier of a default gateway or another Internet location indication to the network server 26. In one example, the network server 26 uses existing Internet registry information and known network tools to generate test packets that are communicated over the Internet 24. The test packets provide information regarding a course or rough estimate of a location of the device 22. In the example of Figure 3, a data processing module 58 gathers such information and processes it to facilitate locating the device 22.

One example includes determining a level of confidence in the initial estimate of the device location based upon the gathered Internet information. Determining the level of confidence in one example depends upon the technique used for making the rough estimate. When the confidence level of the initial estimate is high, the network server 26 uses that estimate as an initial position estimate communicated by an initial position estimate module 60 through a location server interface 62 to the location server 28. In this example, the location server 28 includes a network server interface 64 for communicating with the network server 26 and a GPS module 66, which will use the initial device location estimate to generate a GPS assist communication intended for the device 22. This occurs at 68 in Figure 2.

If the confidence level in the initial estimate is below a selected threshold, the network server 26 attempts to acquire more information regarding the location of the device 22 from the device 22. In one example, the network server 26 determines a plurality of known Internet points (e.g., nodes) that are believed to be near the estimated device location. Some example known Internet points have coordinates that are established and known. Some have associated IP addresses. The network server 26 sends information such as the IP addresses of the selected known Internet points to the device 22. The Internet probe module 54 in one example sends test packets to each received IP address and collects information indicative of at least one metric (e.g., latency associated with communications between the device 22 and the known Internet points) and transmits the collected information back to the network server 26. The collected information received by the network server 26 allows the network server 26 to use the known locations of the selected Internet points and the collected metric information to determine a more accurate or precise estimate of the location of the device 22. In this example, the initial position estimate module 60 uses such information to make the determination regarding the estimated device location.

Once the estimated device location information is provided to the location server 28, the GPS module 66 composes a GPS assist communication to be forwarded to the device 22. In Figure 2, the GPS assist communication comprises at least one GPS assist code that is communicated to the device 22 at 70. The GPS assist communication in one example is based upon the location server 28 communicating with a GPS system or using known GPS system data to make a determination regarding appropriate GPS satellites 32 with which the device 22 can communicate for making a GPS location determination. In the example of Figure 3, the network server 26 forwards the GPS assist communication to the device 22.

The device 22 includes an assisted GPS receiver 72 that comprises an assisted GPS chip 74 that operates much like those in known cell phones having assisted GPS capacity, for example. A device interface 76 and a GPS interface 78 facilitate communications between the assisted GPS receiver 72 and the geolocation module 50.

In this example, the assisted GPS receiver 72 utilizes the information received from the location server 28 for detecting appropriate GPS satellites 32 and determining pseudo-ranges based upon such communications. A GPS processing module 80 generates an indication of the pseudo-ranges and communicates that over the Internet 24 back to the network server 26 in the illustrated example. Figure 2 shows receiving GPS data from the device 22 that indicates a GPS assisted geolocation as processed by the device 22 at 82. The location server 28 receives this indication and the GPS module 66 utilizes known techniques for determining the actual coordinates of the device 22.

It should be understood that the actual coordinates of the device 22 may be determined within a variety of acceptable ranges. In some instances, the actual determined location will be more precise than in others. The use of the term "actual device location" within this description should not be construed to be limited to an exact or precise location but should be understood to include location information within an acceptable range or margin of error, depending on the needs of a particular situation, for example.

In the illustrated example, the network server 26 includes a user interface 90 that facilitates communications with one or more user devices that can be used for instigating a device location procedure, for example. The actual device coordinates determined by the location server 28 based upon the assisted GPS information can be communicated to the user through the user interface 90 so that appropriate action may be taken such as an attempt to retrieve the device 22.

The example embodiment provides the ability to locate a variety of devices that are capable of communicating over the Internet using the example assisted GPS technique: Prior to this invention, assisted GPS was limited to locating devices such as cell phones that were capable of communicating with a cellular network. The disclosed example embodiment expands the capabilities of locating devices and expands the capabilities of assisted GPS techniques in a manner that has a variety of useful applications.

The preceding description is exemplary rather than limiting in nature. Variations and modifications to the disclosed examples may become apparent to those skilled in the art that do not necessarily depart from the essence of this invention. The scope of legal protection given to this invention can only be determined by studying the following claims.

## Claims

1. A method of locating a device (22), comprising:
using an estimated device location based upon Internet information regarding the device for generating an assisted global positioning system communication (68) for the device (22) to facilitate the device (22) interacting with a global positioning system (32)
**characterized by**
determining (42, 56) the estimated device location by:
obtaining information regarding at least one Internet connection of the device (22);
determining a first estimate of the estimated device location from the obtained information;
determining a confidence level regarding the determined first estimate;
using the first estimate as the determined estimated device location if the confidence level is above a threshold; and
determining that additional location information should be obtained if the confidence level is below the threshold.

2. The method of claim 1, comprising:
determining at least one global positioning system code associated with the estimated device location; and
determining an actual device location from information corresponding to the device using the at least one global positioning system code.

3. The method of claim 2, comprising:
providing (70) the at least one determined global positioning system code to the device; and
receiving an indication of the information from the device.

4. The method of claim 3, wherein the received indication comprises pseudo-ranges corresponding to the device detecting global positioning system satellites associated with the at least one determined global positioning system code.

5. The method of claim 3, comprising:
determining the actual device location from a geometric analysis based on the received indication.

6. The method of claim 1, comprising:
obtaining additional information from the device indicating a location of the device relative to at least one Internet node having a known location if the determined confidence level is below the selected threshold.

7. The method of claim 6, comprising:
informing the device regarding the at least one Internet node having the known location;
obtaining at least one indication of a metric from the device indicating an interaction between the device and the at least one Internet node having the known location; and
using the obtained indication to determine the estimated device location.

8. The method of claim 7, wherein the at least one indication comprises information regarding latency associated with communications between the device and the at least one Internet node have the known location.

9. The method of claim 1, comprising:
receiving an assisted global positioning system communication over the Internet at the device, the assisted global positioning system communication having been generated based upon the estimated device location; and
using the received communication to facilitate making at least one global positioning system measurement from the device.

## Patentansprüche

1. Verfahren zur Positionsbestimmung einer Vorrichtung (22), umfassend:
Verwenden einer geschätzten Position der Vorrichtung auf der Basis von Internet-Informationen in Bezug auf die Vorrichtung für die Erzeugung einer Kommunikation des unterstützten globalen Positionsbestimmungssystems (68) für die Vorrichtung (22), um eine Interaktion der Vorrichtung (22) mit einem globalen Positionsbestimmungssystem (32) zu ermöglichen,
**gekennzeichnet durch**
Bestimmen (42, 56) der geschätzten Position der Vorrichtung **durch**:
Einholen von Informationen in Bezug auf mindestens eine Internet-Verbindung der Vorrichtung (22);
Bestimmen einer ersten Schätzung der geschätzten Position der Vorrichtung aus den eingeholten Informationen;
Bestimmen eines Konfidenzmaßes in Bezug auf die bestimmte erste Schätzung;
Verwenden der ersten Schätzung als die bestimmte geschätzte Position der Vorrichtung, wenn das Konfidenzmaß einen Grenzwert überschreitet; und
Bestimmen, dass zusätzliche Positionsinformationen einzuholen sind, wenn das Konfidenzmaß den Grenzwert unterschreitet.

2. Verfahren nach Anspruch 1, umfassend:
Bestimmen mindestens eines mit der geschätzten Position der Vorrichtung assoziierten Codes des unterstützten globalen Positionsbestimmungssystems; und
Bestimmen einer momentanen Position der Vorrichtung auf der Basis von der Vorrichtung entsprechenden Informationen unter Verwendung des mindestens einen Codes des unterstützten globalen Positionsbestimmungssystems.

3. Verfahren nach Anspruch 2, umfassend:
Bereitstellen (70) des mindestens einen bestimmten Codes des unterstützten globalen Positionsbestimmungssystems an die Vorrichtung; und
Empfangen einer Angabe der Informationen von der Vorrichtung.

4. Verfahren nach Anspruch 3, wobei die empfangene Angabe Pseudoentfernungen umfasst, welche den mit dem mindestens einen bestimmten Code des unterstützten globalen Positionsbestimmungssystems assoziierten Satelliten des globalen Positionsbestimmungssystems, welche die Vorrichtung erkennen, entsprechen.

5. Verfahren nach Anspruch 3, umfassend:
Bestimmen der momentanen Position der Vorrichtung aus einer geometrischen Analyse auf der Basis der empfangenen Angabe.

6. Verfahren nach Anspruch 1, umfassend:
Einholen von zusätzlichen Informationen von der Vorrichtung, welche eine Position der Vorrichtung im Verhältnis zu dem mindestens einen Internet-Knoten, dessen Position bekannt ist, angibt, wenn das bestimmte Konfidenzmaß den ausgewählten Grenzwert unterschreitet.

7. Verfahren nach Anspruch 6, umfassend:
Informieren der Vorrichtung in Bezug auf den mindestens einen Internet-Knoten, dessen Position bekannt ist;
Einholen mindestens einer Angabe einer Metrik von der Vorrichtung, welche eine Interaktion zwischen der Vorrichtung und dem mindestens einen Internet-Knoten, dessen Position bekannt ist, angibt; und
Verwenden der eingeholten Angabe, um die geschätzte Position der Vorrichtung zu bestimmen.

8. Verfahren nach Anspruch 7, wobei die mindestens eine Angabe Informationen in Bezug auf die mit Kommunikationen zwischen der Vorrichtung und dem mindestens einen Internet-Knoten, dessen Position bekannt ist, assoziierte Latenz umfasst.

9. Verfahren nach Anspruch 1, umfassend:
Empfangen einer Kommunikation des unterstützten globalen Positionsbestimmungssystems über das Internet an der Vorrichtung, wobei die Kommunikation des unterstützten globalen Positionsbestimmungssystems auf der Basis der geschätzten Position der Vorrichtung erzeugt wurde; und
Verwenden der empfangenen Kommunikation, um das Durchführen mindestens einer Messung des unterstützten globalen Positionsbestimmungssystems von der Vorrichtung zu ermöglichen.

## Revendications

1. Procédé de localisation d'un dispositif (22) comprenant :
Utilisation d'un emplacement estimé du dispositif en se basant sur des informations provenant de l'Internet concernant le dispositif pour générer une communication de système de positionnement global assistée (68) pour le dispositif (22) afin de faciliter l'interaction du dispositif (22) avec un système de positionnement global (32)
**caractérisé par**
Détermination (42, 56) de l'emplacement estimé du dispositif en :
obtenant des informations concernant au moins une connexion Internet du dispositif (22) ;
déterminant une première estimation de l'emplacement estimé du dispositif à partir des informations obtenues ;
déterminant un niveau de confiance concernant la première estimation déterminée ;
Utilisation de la première estimation comme emplacement estimé déterminé du dispositif si le niveau de confiance est supérieur à un seuil donné ; et
Détermination de la nécessité d'obtenir des informations de localisation supplémentaires si le niveau de confiance est inférieur au seuil.

2. Procédé selon la revendication 1, comprenant :
Détermination d'au moins un code de système de positionnement global associé à l'emplacement estimé du dispositif ; et
Détermination d'un emplacement réal du dispositif à partir des informations correspondant au dispositif qui utilise l'au moins un code de système de positionnement global.

3. Procédé selon la revendication 2, comprenant :
Délivrance (70) dudit code de système de positionnement global déterminé au dispositif ; et
Réception d'une indication des informations de la part du dispositif.

4. Procédé selon la revendication 3, dans lequel l'indication reçue comprend des pseudo-portées correspondant au dispositif détectant des satellites du système de positionnement global associés à l'au moins un code de système de positionnement global déterminé.

5. Procédé selon la revendication 3, comprenant :
Détermination de l'emplacement réel du dispositif à partir d'une analyse géométrique basée sur l'indication reçue.

6. Procédé selon la revendication 1, comprenant :
Obtention d'informations supplémentaires de la part du dispositif indiquant un emplacement du dispositif par rapport à au moins un noeud Internet ayant un emplacement connu si le niveau de confiance déterminé est inférieur au seuil sélectionné.

7. Procédé selon la revendication 6, comprenant :
Information du dispositif concernant l'au moins un noeud Internet se trouvant à l'emplacement connu ;
Obtention d'au moins une indication d'une mesure de la part du dispositif indiquant une interaction entre le dispositif et l'au moins un noeud Internet se trouvant à l'emplacement connu ; et
Utilisation de l'indication obtenue pour déterminer l'emplacement estimé du dispositif.

8. Procédé selon la revendication 7, dans lequel l'au moins une indication comprend des informations concernant la latence associée aux communications entre le dispositif et l'au moins un noeud Internet se trouvant à l'emplacement connu.

9. Procédé selon la revendication 1, comprenant :
Réception d'une communication de système de positionnement global assistée par le biais de l'Internet au niveau du dispositif, la communication de système de positionnement global assistée ayant été générée en se basant sur l'emplacement estimé du dispositif ; et
Utilisation de la communication reçue pour faciliter la réalisation d'au moins une mesure du système de positionnement global à partir du dispositif.
